# EUROPEAN PATENT APPLICATION

(11) **EP 1 501 094 A2**
(43) Date of publication of application: **26.01.2005**
(21) Application number: 04017365.0
(22) Date of filing: 22.07.2004
(51) Int. Cl.: G11B 27/034

(54) **Editing apparatus, information reproduction/recording apparatus, editing method, editing program and information recording medium**

(30) Priority: 23.07.2003 JP 2003200281
(71) Applicant: Pioneer Corporation, Tokyo-to (JP)
(72) Inventor: Takeda, Hidenori c/o Pioneer Corporation, Tokorozawa-shi Saitama-ken (JP)
(74) Representative: Grünecker, Kinkeldey, Stockmair & Schwanhäusser Anwaltssozietät

(57) **Abstract**

An editing apparatus (100) which edits the processes of at least a reproduction/recording process that re-records information that is reproduced from a recording medium to that recording medium itself, or a reproduction/recording process that re-records said reproduced information to other recording medium, is provided with: a judgment device (160) which determines whether or not it is possible to execute said reproduction/recording process based on the recorded state of said information that is approved for at least said recording medium or said other recording medium before executing an editing process of said processes; and an output device (140) which outputs notification information to the outside in order to notify of said judgment results before execution of said editing process.

## Description

### BACKGROUND OF THE INVENTION

### 1.Field of the Invention:

This invention relates to an editing apparatus, information reproduction/recording apparatus, editing method, editing program and information recording medium, and more particularly to an editing apparatus and editing method for editing information before performing so-called 'dubbing', which is the recording of information that is reproduced from one recording medium to another recording medium, and moreover relates to the editing program for performing that editing process, the recording medium on which the program for that editing process is recorded, and the information reproduction/recording apparatus that includes the editing apparatus.

### 2.Related Art:

In recent years, recorders, which are capable of temporarily recording a program that has been received by way of broadcast signal onto a large-capacity recording medium such as a hard disc, and then later executing so-called 'dubbing' by transferring and recording that program onto an optical disc such as a DVD (Digital Versatile Disc) , are becoming common.

In a conventional recorder, programs to be dubbed onto an optical disc are selected and extracted from among programs recorded on a hard disc or the like, and a dubbing list is created which contains just the programs to be dubbed in the dubbing sequence, and the dubbing process is executed in order from the hard disc or the like to the optical disk based on that dubbing list.

Conventionally, construction has been such that after the dubbing list had been created, notification was given on the display for the first time whether or not dubbing could be executed for the programs displayed in the dubbing list (that is whether or not dubbing could be performed in compliance to the recording format of the optical disc) and the recording time required for that dubbing was displayed.

However, with the dubbing method of the conventional recorder described above, as long as the dubbing list has not been created, it is not possible to know whether or not dubbing can actually be executed according to the recording format of the optical disc, and as a result, there was a problem in that the user had to perform the process of creating a sometime useless dubbing list.

### SUMMARY OF THE INVENTION

Taking the problem described above into consideration, it is the object of this invention to provide an editing apparatus and editing method, as well as an editing program for performing that editing process, the recording medium on which the program for that editing process is recorded, and the information reproduction/recording apparatus that includes the editing apparatus, that is capable of improving convenience and efficiency for the user when performing dubbing.

The above object of the present invention can be achieved by a editing apparatus of the present invention. The editing apparatus which edits the processes of at least a reproduction/recording process that re-records information that is reproduced from a recording medium to that recording medium itself, or a reproduction/recording process that re-records the reproduced information to other recording medium, is provided with: a judgment device which determines whether or not it is possible to execute the reproduction/recording process based on the recorded state of the information that is approved for at least the recording medium or the other recording medium before executing an editing process of the processes; and an output device which outputs notification information to the outside in order to notify of the judgment results before execution of the editing process.

According to the present invention, in the operation of a recorder, before executing the editing process required for dubbing to a recording medium, the titles that are the object of the dubbing are judged as to whether or not they are capable of being dubbed to the recording medium, and notification data indicating the judgment results are output, so based on this notification data, the user is able to determine whether or not dubbing to the recording medium is possible before actually executing the editing process. Also, by determining whether or not dubbing is possible before executing the editing process, it is possible to improve the convenience and efficiency of the dubbing process.

In one aspect of the present invention can be achieved by the editing apparatus of the present invention. The editing apparatus of the present invention is wherein the output device outputs as the notification information: original-information-Identification information which identifies the information that is recorded on the recording medium before execution of the reproduction/recording process; object-information- Identification information for identifying the information that is the object of one of the reproduction/recording processes; and prohibition-information- Identification information that, indicates the information that is prohibited based on the judgment information from the judgment means from becoming the object of one of the reproduction/recording processes.

According to the present invention, since a representative image of the titles on a recording medium, a dubbing list, addition-prohibited marks and warning marks are output, it is possible to easily know whether or not dubbing is possible at that output destination.

In another aspect of the present invention can be achieved by the editing apparatus of the present invention. The editing apparatus of the present invention is wherein the judgment device is further provided with whether or not unprocessible information can become the object of one of the reproduction/recording processes by performing an editing process which is predetermined in the unprocessible information, when it was determined that the information that is recorded on the recording medium is unprocessible information that cannot become the object of one of the reproduction/recording processes in its recorded state as recorded on the recordingmedium; and the output device outputs as the notification information for the unprocessible information that can become the object of one of the reproduction/recording processes by performing the editing process: original-information- Identification information which identifies the unprocessible information that is recorded on the recording medium before execution of the reproduction/recording process; and object-information-Identification information which identifies the contents of the unprocessible information that becomes the object of one of the reproduction/recording processes after the editing process.

According to the present invention, in addition to determining whether or not a title can be the obj ect of dubbing as it is recorded on a recording medium, a past log is used to determine whether or not dubbing would be possible by executing an editing process, and since the those judgment results are output in two stages, it is possible to determine beforehand whether a title can become the object of dubbing by a related editing process even though the title cannot be the object of dubbing as is, and thus it is possible to more efficiently determine whether or not dubbing is possible.

In further aspect of the present invention can be achieved by the editing apparatus of the present invention. The editing apparatus of the present invention is wherein the object-information-identification information is provided with attribute information that shows the attributes of the unprocessible information that becomes the object of one of the reproduction/recording processes after the editing process.

According to the present invention, since attribute marks indicating the attributes of each dubbing title that is the object of dubbing is included after the editing process, it is possible from the attribute data to visually identify whether data can be processed or not.

In further aspect of the present invention can be achieved by the editing apparatus of the present invention. The editing apparatus of the present invention, the object-information-identification information uses the same the attribute information to show the unprocessible information having the same attributes in a plurality of the unprocessible information.

According to the present invention, for dubbing titles having a plurality of attributes, dubbing titles having the same attributes are indicated using an attribute mark, so it is possible to easily check which dubbing titles have the same attributes.

In further aspect of the present invention can be achieved bytheeditingapparatusofthepresentinvention. Theediting apparatus of the present invention is wherein the output device outputs as the notification information: original-information-identification information which identifies the information that is recorded on the recording medium before execution of the reproduction/recording process; and object-information-identification information that is object-information-Identification information which identifies the information that is the object of one of the reproduction/recording processes, and shows only the information that is determined, based on the judgment information of the judgment device, to be capable of being the object of one of the reproduction/recording processes.

According to the present invention, since attribute marks are displayed for each dubbing title that indicates only the dubbing titles that can be dubbed based on the judgment of whether or not dubbing is possible, it is possible to check at a glance which dubbing titles can be dubbed.

In further aspect of the present invention can be achieved bytheeditingapparatusofthepresentinvention. Theediting apparatus of the present invention is wherein the judgment device determines whether or not one of the reproduction/recording processes can be executed based on at least: the type of color-television standard broadcast format for the approved information that is recorded on at least the recording medium or the other recording medium; the number of times copying is allowed for the information on the recording medium before execution of the reproduction/recording process; the editing units for the information on the recording medium before execution of the reproduction/recording process; the contents of management information for managing the information and that correspond to the information on the recording medium before execution of the reproduction/recording process; the aspect ratio of image information approved for recording on at least the recording medium or the other recording medium; the resolution of image information approved for recording on at least the recording medium or the other recording medium; the encoding method of audio information approved for recording on at least the recording medium or the other recording medium; the recording capacity of the area on at least the recording medium or the other recording medium for which recording of the information is possible; or the language numbers of audio information approved for recording on at least the recording medium or the other recording medium.

According to the present invention, the standard color broadcast format of moving images contained in a title, the aspect ratio of the moving images, and copying restrictions according to copyright law were used as judgment criteria for the judgment, in addition to these, for example, the following cases could also be used as judgment criteria: the case in which based on the amount of data of the title to be dubbed, it is not possible to maintain enough empty space on the dubbing destination to record the title; the case in which dubbing itself is prohibited when copying of the entire title is restricted; the case in which dubbing itself is prohibited when the moving images on a recording medium are edited in frame units; the case in which dubbing itself is prohibited when the contents of the management data for a title on a recording medium in title units is not allowed on a recording medium; the case in which there is a warning about performing dubbing (warning that editing by division is assumed) when there are moving images contained in one title on a recording medium having different resolution; the case in which there is a warning about performing dubbing (warning that editing by division is assumed for each audio format) when there is audio for the moving images contained in one title on a recording medium having different audio format; or the case in which there is a warning about performing dubbing (warning that editing by division is assumed for each language) when there is audio using a plurality of kinds of languages contained in the moving images of one title on a recording medium. Also, for the judgment criteria of the judgment, in addition to the criteria described above, for example, the following cases could also be used as judgment criteria: the case in which there is a warning about performing editing (warning that editing by division is assumed) when there are moving images contained in one dubbing title having different resolution; or the case in which there is a warning about performing editing (warning that editing by division is assumed for each audio format) when there is audio for the moving images in one dubbing title having different audio format. By using these various judgment criteria and executing the dubbing-programmingprocess of this embodiment, it is possible to more accurately determine whether performing dubbing is possible according to the recording format of a recording medium.

In further aspect of the present invention can be achieved by the editing apparatus of the present invention. The editing apparatus of the present invention is provided with: a reproduction device which reproduces specified the information from the recording medium based on the contents of the output notification information; a information-editing device which performs the editing process that corresponds to specified contents on the specified information based on the contents of the notification information; and a recording device which records at least the reproduced information or information for which the editing process was performed on at least the recording medium or the other medium based on the contents of the output notification information.

According to the present invention, the case of using a HDD and a DVD as the recording media for dubbing is explained, however, beside this, the invention could also be applied to the case of performing dubbing using a pair of DVD or pair of HD, or the invention could also be applied to the case of executing dubbing from a DVD to a HD.

The above object of the present invention can be achieved by a editing method of the present invention. The editing method of editing the contents of at least a reproduction/recording process that re-records information that is reproduced from a recording medium to that recording medium itself, or a reproduction/recording process that re-records the reproduced information to other recording medium, is provided with: a judgment process of determining whether or not it is possible to execute the reproduction/recording process based on the recorded state of the information that is approved for at least the recording medium or the other recording medium before executing an editing process of the contents; and an output process of outputting notification information to the outside in order to notify of the judgment results before execution of the editing process.

According to the present invention, in the operation of a recorder, before executing the editing process required for dubbing to a recording medium, the titles that are the object of the dubbing are judged as to whether or not they are capable of being dubbed to the recording medium, and notification data indicating the judgment results are output, so based on this notification data, the user is able to determine whether or not dubbing to the recording medium is possible before actually executing the editing process. Also, by determining whether or not dubbing is possible before executing the editing process, it is possible to improve the convenience and efficiency of the dubbing process.

The above object of the present invention can be achieved by an information recording medium of the present invention. The information recording medium in which an editing program is recorded in a readable way by a computer included in an editing apparatus, the editing program causing the computer to function as: a judgment device which determines whether or not it is possible to execute said reproduction/recording process based on the recorded state of said information that is approved for at least said recording medium or said other recording medium before executing an editing process of said contents; and an output device which outputs notification information to the outside in order to notify of said judgment results before execution of said editing process.

According to the present invention, in the operation of a recorder, before executing the editing process required for dubbing to a recording medium, the titles that are the object of the dubbing are judged as to whether or not they are capable of being dubbed to the recording medium, and notification data indicating the judgment results are output, so based on this notification data, the user is able to determine whether or not dubbing to the recording medium is possible before actually executing the editing process. Also, by determining whether or not dubbing is possible before executing the editing process, it is possible to improve the convenience and efficiency of the dubbing process.

### BRIEF EXPLANATION OF THE DRAWINGS

FIG. 1 is a block diagram showing the main construction of the recorder of an embodiment of this invention.
FIG. 2 is a flowchart showing the dubbing list creation process of an embodiment of this invention.
FIG. 3 is a flowchart showing the editing process before dubbing of an embodiment of this invention.
FIG. 4 is a drawing showing an example of executing a dubbing programming process of an embodiment of this invention.

### DESCRIPTION OF THE PREFERRED EMBODIMENT

Next, the preferred embodiment of the invention will be explained based on the drawings. The embodiment explained below is an embodiment in which the invention is applied to a recorder that is a data recording/reproduction apparatus for recording a broadcast program onto a hard disc (hereafter referred to as HD) and DVD.

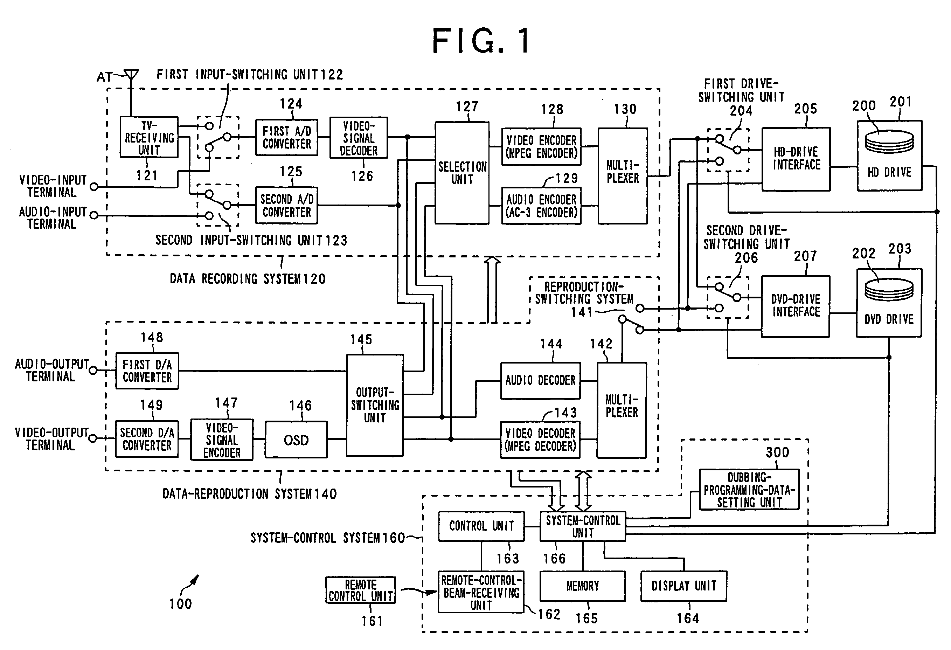

First, FIG. 1 will be used to explain the overall construction and basic operation of the recorder. FIG. 1 is a block diagram showing the main construction of the recorder of this invention.

As shown in FIG. 1, the recorder 100 of this embodiment is provided with: a HD drive 201 that writes data to or reads data from an HD 200, which is a recording medium on which video data and audio data are recorded; a DVD drive 203 as a recording means that writes data to or reads data from a DVD 202, which is another recording medium on which video data and audio data are recorded; a data-recording system 120 into which video data and audio data, such as the video signal and audio signal of a broadcast program, are input, and that records that video data and audio data onto the HD 200 or DVD 202; a data-reproduction system 140 that reads video data and audio data that are already recorded on the HD 200 or DVD 202, and reproduces the respective data; and a system-control system 160 that controls the data-recording system 120 and data-reproduction system 140.

A first drive-switching unit 204 that switches between the output from the DVD drive 203 and the output from the data-recording system 120, and an HD drive interface 205 that complies to a standard such as ATAPI (AT Attachment Packet Interface) are connected to the HD drive 201, and this first drive-switching unit 204 switches the input and output according to control from the system-control unit 166 described later.

Also, this HD drive 201 reads program streams from an HD 200 that consists of video data and audio data that were recorded on the HD 200 beforehand, and outputs them to the data-reproduction system 140 by way of the HD drive interface 205, and it also records program streams onto the HD 200 that were generated by the data-recording system 120 and input by way of the HD drive interface 205.

On the other hand, a second drive-switching unit 206 that switches between the output from the HD drive 201 and the output from the data-recording system 120, and a DVD drive interface 207 that complies to a standard such as ATAPI are connected to the DVD drive 203, and similar to the first drive-switching unit 204, this second drive-switching unit 206 switches the input and output according to control from the system-control unit 166 described later.

Moreover, similar to the HD drive 201, this DVD drive 203, reads program streams from the DVD 202 that contains video data and audio data that were recorded beforehand, and outputs the streams to the data-reproduction system 140 by way of the DVD drive interface 207 , and it also records program streams onto the DVD that were generated by the data-recording system 120 and input by way of the DVD drive interface 207.

Next, the construction and operation of the data-recording system 120 of the recorder 100 of this embodiment will be explained.

The data-recording system 120 of the recorder 100 of this embodiment is provided with: a TV receiving unit 121 that, by way of an antenna AT, receives broadcast signals that are sent from broadcast stations; a first input-switching unit 122 and second input-switching unit 123 that switch between analog video signals and audio signals that are input from the outside by way of a video-input terminal and audio-input terminal, and the output from the TV receiving unit 121; a first analog-to-digital (hereafter referred to as A/D) converter 124 that converts the received or input TV video signal to a digital signal; a second A/D converter 125 that converts a received or input audio signal to a digital signal; a video-signal decoder 126 that decodes the TV video signal, which was converted to a digital signal, to a video signal; a selection unit 127 that selects the video signal and audio signal to encode; a video encoder 128 that converts the video signal that was selected by the selection unit 127 to MPEG (Motion Picture Expert Group) format; an audio encoder 129 that converts the audio signal that was selected by the selection unit 127 to AC (Audio Coding) -3 format; and a multiplexer 130 that generates a program stream from the MPEG format video data and AC-3 format audio data.

The TV receiving unit 121 receives, by way of an antenna AT, a broadcast signal, for example an RF signal such as a VHF or BS signal, that is sent from a broadcast station, and together with converting the received signal wave that is tuned to a receiving range that is selected by the user to an IF (intermediate frequency) signal, it demodulates the signal to a TV video signal and audio signal and outputs them to the first input-switching unit 122.

Also, the TV video signals that are output from the TV receiving unit 121 and analog video signals that are input from the outside by way of the video-input terminal are input to the first input-switching unit 122, and this first input-switching unit 122 selectively switches between these input TV video signals based on control from the system-control system 160, and outputs the video signal to the first A/D converter 124.

On the other hand, the audio signal that is output from the TV receiving unit 121 and the analog audio signal that is input from the outside by way of the audio-input terminal are input to the second input-switching unit 123, and this second input-switching unit 123 selectively switches between these input audio signals based on control from the system-control unit 160 and outputs the signal to the second A/D converter 125.

Moreover, the TV video signal, which is the analog signal that was selected by the first input-switching unit 122, is input to the first A/D converter 124, and this first A/D converter 124 converts the TV video signal, which is the input analog signal, to a digital signal and outputs it to the video-signal decoder 126.

After that, the TV signal that has been converter to a digital signal is input to the video-signal decoder 126, and this video-signal decoder 126 decodes the input TV video signal and converts it to a normal video signal, for example, a NTSC format video signal. Also, this video-signal converter 126 outputs the converted video signal to the selection unit 127.

On the other hand, the audio signal, which is the analog signal that was selected by the second input-switching unit 123, is input to the second A/D converter 125, and this second A/D converter 125 converts the audio signal, which is the input analog signal, to a digital signal and outputs it to the selection unit 127.

The video signal and audio signal that were output from the video-signal decoder 126 and second A/D converter 125, and the decoded video signal and audio signal that were output from the HD drive 201 or DVD drive 203 when performing dubbing, as will be described later, are input to the selection unit 127. This selection unit 127 selects one of the input video signals and audio signals based on control from the system-control system 160, and outputs the selected video signal to the video encoder 128 and outputs the selected audio signal to the audio encoder 129.

By doing this, the video signal that was selected by the selection unit 127 is input to the video encoder 128, and this video encoder 128 converts the input video signal to MPEG format video data, and outputs that converted video data to the multiplexer 130.

On the other hand, the audio signal that was selected by the selection unit 127 is input to the audio encoder 129, and this audio encoder 129 converts the input video signal to AC-3 format audio data, and outputs that converted audio data to the multiplexer 130.

Moreover, the video data converted to MPEG format and the audio data converted to AC-3 format are input to the multiplexer 130, and this multiplexer 130, together with generating a program stream based on the input video data and audio data, outputs that generated program stream to the first drive-switching unit 204 and second drive-switching unit 206.

Next, the construction and operation of the data-reproduction system 140 of the recorder 100 of this embodiment will be explained.

The data-reproduction system 140 of the recorder 100 of this embodiment is provided with: a reproduction-switching unit 141 that selects either the reproduction output from the HD 200 or the reproduction output from the DVD 202; a de-multiplexer 142 that extracts the audio data and video data, which are output from the HD drive 201 or DVD drive 203, from the program stream; a video decoder 143 and audio decoder 144 as a reproduction means that decodes the video signal and audio signal that are separated by this de-multiplexer 142; an output-switching unit 145 that switches between the video signal and audio signal that were output from the video decoder 143 and audio decoder 144, and the video signal and audio signal that were output from the TV receiving unit 121; a thumbnail OSD (On Screen Display) 146 that generates thumbnails (so-called representative images) that are to be superimposed over the image that is displayed on the monitor to be described later; a video-signal encoder 147 that converts the signal to a TV signal; a second digital-to-analog (hereafter referred to as D/A) converter 149 that converts the video signal, which is a digital signal, to an analog signal; and a first D/A converter 148 that converts the audio signal, which is a digital signal, to an analog signal; and wherein the video signal and audio signal that are converted to analog signals are output to the outside by way of a video-output terminal and audio-output terminal.

At this time, the program stream that is output from the HD drive 201 by way of the HD-drive interface 205 and the program stream that is output from the DVD drive 203 by way of the DVD-drive interface 207 are input to the reproduction-switching unit 141, and this reproduction-switching unit 141 selects one of the program streams that is output from one of the drives based on control from the system-control unit 166, and outputs the selected program stream to the de-multiplexer 142.

The program stream that was selected by the reproduction-switching unit 141 is input to the de-multiplexer 142, and this de-multiplexer 142 separates the video data and audio data from the input program stream, and then outputs the separated video data and audio data to the video decoder 143 and audio decoder 144, respectively.

Particularly, this de-multiplexer 142 separates video data from the program stream that has MPEG format, and audio data that has AC-3 format.

Video data having MPEG format that was separated from the program stream is input to the video decoder 143, and this video decoder 143 decodes the input MPEG formatted video data and converts it to a video signal, and outputs that video signal, which is a decoded digital signal, to the output-switching unit 145.

On the other hand, the audio data having AC-3 format that was separated from the program stream is input to the audio decoder 144, and this audio decoder 144 decodes the input AC-3 formatted audio data and converts it to an audio signal, and outputs the audio signal, which is a decoded digital signal, to the output-switching unit 145.

The video signal and audio signal, which are digital signals output from the data-recording system 120, and the video signal and audio signal that are decoded by the video decoder 143 and audio decoder 144 are input to the output-switching unit 145, and this output-switching unit 145, based on control from the system-control unit 166, switches between the video signal and audio signal that are output from the data-recording system 120 and the decoded video and audio signal, and outputs the video signal to the OSD 146, and outputs the audio signal to the first D/A converter 148.

In this embodiment, the video signal that is output from the video-signal decoder 126 and the audio signal that is output from the second A/D converter 125 are input to the output-switching unit 145.

Also, the video signal that is switched by the output-switching unit 145 is input to the OSD 146, and this OSD 146 superimposes the necessary text data over the input video signal, and outputs this video signal with superimposed text data to the video-signal encoder 147.

In this embodiment, when performing dubbing as will be described later, the OSD 146 generates video data showing the contents of the dubbing list based on an instruction from the system-control system 160, and superimposes the generated video data onto the input video signal or switches from the input video signal and outputs it to the video-signal encoder 147.

Also, the video data that corresponds to the dubbing list generated as mentioned above by the OSD 146 of this embodiment will be described in detail later.

On the other hand, the video signal, onto which the text data has been superimposed, is input to the video-signal encoder 147, and in order to display this input video signal to an external monitor or the like, this video-signal encoder 147 converts the signal to TV video format and then outputs the video signal converted to TV format to the second D/A converter 149.

The video signal, which is a digital signal that is converted to TV format, is input to the second D/A converter 149, and this second D/A converter 149 converts the video signal, which is this input digital signal, to an analog signal, and outputs the video signal that has been converted to an analog signal to the outside by way of the video-output terminal.

Moreover, the audio signal, which is the digital signal switched to by the output-switching unit 145, is input to the first D/A converter 148, and this first D/A converter 148 converts the audio signal, which is the input digital signal, to an analog signal, and outputs the audio signal that has been converted to an analog signal to the outside by way of the audio-output terminal.

Next, FIG. 1 will be used to explain the construction and operation of the system-control system 160 of the recorder 100 of this embodiment.

The system-control system 160 of the recorder 100 of this embodiment is provided with: a remote-control-beam-receiving unit 162 that receives a light beam that is emitted from the remote-control device 161 that performs remote control of the recorder 100; a control unit 163 by which the user performs control settings; a display unit 164 that displays data desired by the user such as data for confirming controls by the remote-control device 161 or control unit 163; a system-control unit 166 that serves as a judgment means and output means that sets data required for dubbing (hereafter, referred to as 'dubbing data') based on data from key input (hereafter, referred to as 'key-input data') to the remote-control device 161 or control unit 163 when performing dubbing, and controls the OSD 146 and generates video data for the dubbing data in order to display it on a monitor (not shown in the figures); a memory 165 that stores programs necessary for various operations; and the system-control unit 166 as a judgment means and output means that controls the entire system.

Here, the remote-control device 161 is provided with a plurality of keys such as various confirmation buttons and numeric keys, and UP/DOWN and LEFT/RIGHT cursor keys located in the center of the remote-control device 161, for example.

Next, the remote-control-beam-receiving unit 162 receives a beam of light such as an infrared beam that is emitted from the remote-control device 161, and converts that received light beam to a specified signal and outputs it to the control unit 163.

On the other hand, similar to the remote-control device 161, the control unit 163 is provided with a plurality of keys such as various confirmation buttons and numeric keys, and UP/DOWN and LEFT/RIGHT keys.

Also, this control unit 163 outputs a specified signal that is output from the remote-control-beam-receiving unit 162 according to key operation to the system-control unit 166.

The UP/DOWN and LEFT/RIGHT keys of this control unit 163 have the same construction as the UP/DOWN and LEFT/RIGHT keys on the remote-control device 161.

Moreover, the display unit 164 has a beam-emitting unit is provided with a plurality of light-emitting elements such as liquid crystals, and it displays data desired by the user such as data for confirming an operation by the remote-control device 161 or control unit 163.

Next, as a data-editing means, the program-data-setting unit 300 automatically records a broadcast program onto the HD 200 or DVD 202 at a preset time, and when performing the setting to dub the data recorded on the HD 200 to the DVD 202, it sets the dubbing data that is necessary for dubbing based on key-input data that is input from the remote-control device 161 or control unit 163.

Details of the process executed by the system-control unit 166 of this embodiment, and details about the video data showing the dubbing list created by the OSD 146 will be described later.

Next, together mainly provided with a central processing unit (CPU), the system-control unit 166 is provided with a key-input port, and various input/output ports such as the output port to the display unit 164, and it performs overall control of general functions for reproducing data from or recording data to a HD 200, or reproducing data from or recording data to a DVD 202.

Particularly, based on control key input from the remote-control device 161 or control unit 163, the system-control unit 166 of this embodiment performs control such that the program-data-setting unit 300 sets dubbing-program data, and performs control such that video data of the dubbing list created by the OSD 146 is output to the outside by way of the video-signal encoder 147 and second D/A converter 149.

Moreover, when performing dubbing or when recording a programmed broadcast program onto the HD 200 or DVD 202, the system-control unit 166 reads control programs stored in the memory 165 in order to execute various processes, and temporarily stores data during processing in the memory 165.

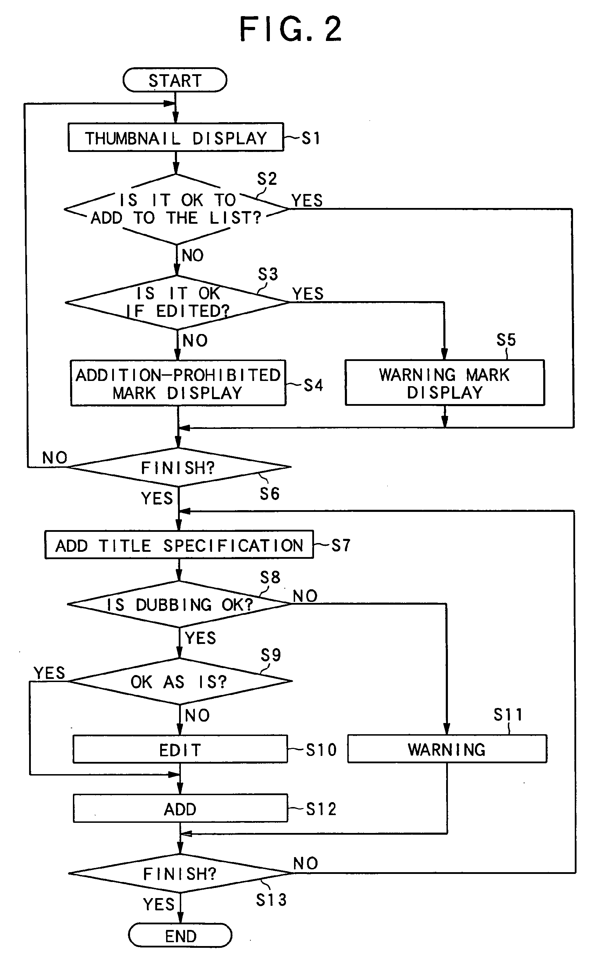

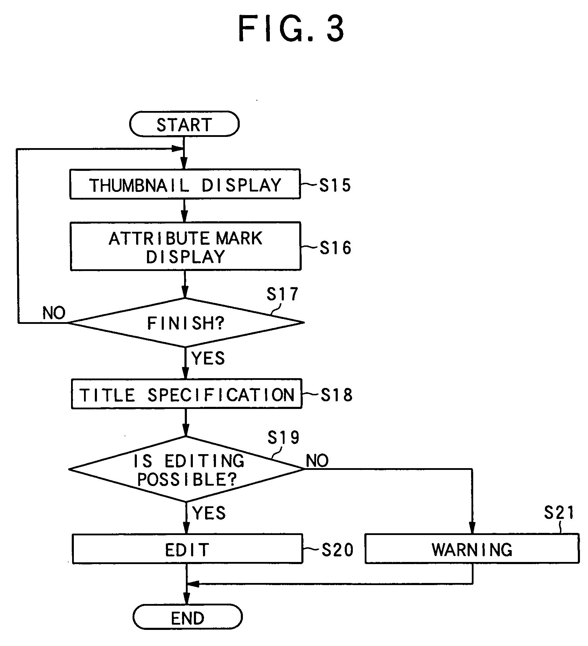

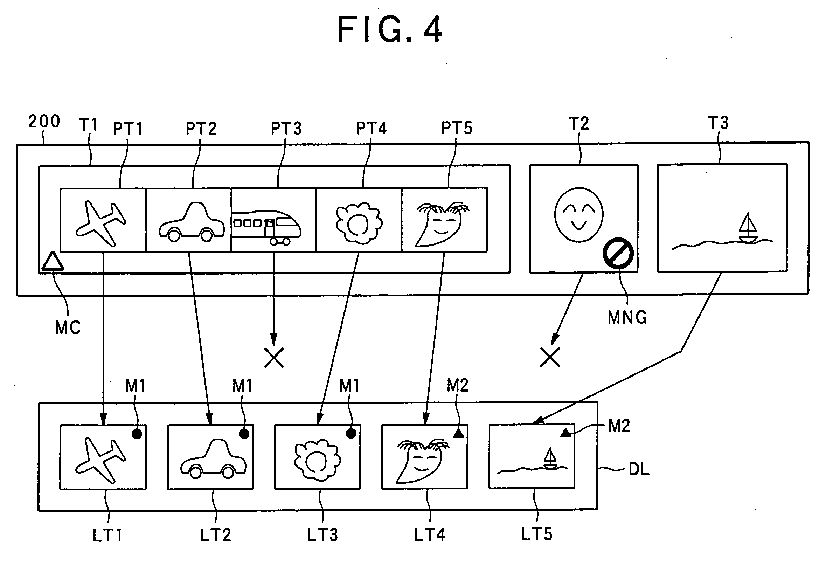

Next, FIG. 2 to FIG. 4 will be used to explain in detail operations, such as dubbing, by the system-control unit 166 of the recorder 100. FIG. 2 and FIG. 3 are flowcharts showing the dubbing-programming process executed by the system-control unit 166, and FIG. 4 is one example of the dubbing list that is displayed on an external display (not shown in the figures) according to execution of the dubbing-programming process.

First, FIG. 4 will be used to explain the contents of the current data recorded on the HD 200 as a premise for explaining the dubbing-programming process of this embodiment. In the explanation below, the unit for the data recorded on the HD 200 will be called a title. More specifically, the title referred to here is a title of one set of recorded data that has time continuity or is one story.

Also, in the embodiment explained below, at the current point in time, three titles T, T1 to T3, are recorded on the HD 200. Furthermore, the title T1 is recorded such that it can be divided into a plurality of partial titles PT1 to PT5. The title T1 is actually one title T, however, it is recorded such that its contents can be divided into partial titles PT1 to PT5.

On the other hand, as a restriction on the side of the DVD 202, titles that can be recorded (dubbed) onto the DVD 202 are only titles that have no recording restrictions due to copyright data, or are recorded using NTSC format moving images, which is one type of standard color broadcasting. Furthermore, even formoving images having the same NTSC format, collective recording of moving images having differing aspect ratios as one title is prohibited.

Moreover, in regards to the attributes of each title T recorded on the HD 200, since the restrictions during the recording of data onto the HD 200 are relatively relaxed, it is possible to record programs having various attributes. Also, in the case of this embodiment, the partial titles PT1, PT2 and PT4 of title T1 on the HD 200 each contain moving images having a NTSC format aspect ratio of 4:3, and partial title PT5 contains moving images having a NTSC format aspect ratio of 16:9.

Also, in regards to partial title PT3, it itself has a NTSC format aspect ratio of 4:3, however, due to copyright restriction, it is a partial title that can only be recorded once after the broadcast (in other words, in this embodiment, after being recorded on the HD 200, copying it to another recording medium without a copyright-protection function is prohibited).

Furthermore, title T2 corresponds to PAL format, which is another standard color broadcast format, and cannot be dubbed to the DVD 202, and title T3 contains moving images that, similar to partial title PT5, have a NTSC format aspect ratio of 16:9.

In the case of dubbing each of the titles T or partial titles PT (hereafter, referred to as simply titles T) on the HD 200 having the configuration described above, first, the process of creating a dubbing list that shows specifically the titles to be dubbed is executed.

In other words, as shown in FIG. 2, first for one of the titles T of the titles T to be dubbed, representative images that represent the contents of the titles T as shown in FIG. 4 for example, are reproduced from the HD 200 and displayed on an external display or the like (step S1).

Also, at the same time as the representative images are displayed, attribute data is extracted from the management data that contains the attribute data for each of the titles T recorded in advance on the HD 200, and this data shows the attributes (more specifically, the standard color broadcast method and aspect ratio described above, or data indicating the copying restrictions according to copyright law) of the titles T whose representative images are displayed, and based on the contents, whether or not the title can be dubbed onto the DVD 202 in accordance to the restrictions for the DVD 202 is checked (step S2). Also, when the current title T that is the object of the judgment has attributes such that it can be dubbed as recorded on the HD 200 onto the DVD 202, or in terms of the example shown in FIG. 4, when the title T is judged to be title T3 shown in FIG. 4 (step S2: YES), the process moves immediately to step S6, which will be described later.

On the other hand, in the judgment of step S2, when the current title T that is the object of the judgment does not have attributes that allow dubbing the title T as recorded onto the DVD 202 (step S2: NO), next, that title T is checked whether or not it could be dubbed onto the DVD 202 after performing the editing process to be described later (step S3).

When the title T has attributes that allow it to be dubbed onto the DVD 202 after performing some kind of editing process (step S3: YES) , a warning mark MC for calling attention to the fact that the necessary editing process must be performed before dubbing is added and displayed on the representative image corresponding to the title T that is the object of that judgment with the title T as the unit (step S5); however on the other hand, when the title T has attributes that do not allow dubbing onto the DVD 202 no matter what editing process is performed (step S3: NO) , an addition-prohibited mark MNG indicating that dubbing of the title onto the DVD 202 is absolutely prohibited is added and displayed on the representative image corresponding to the title T that is the object of the judgment (step S4).

Here, as an example of the display in step S5, for example, in the case shown in FIG. 4, title T1 cannot be dubbed onto the DVD 202 collectively as one title because of the above restrictions, however, by dividing title T1 into partial titles PT1 to PT5 by using an editing process, except for the partial title PT3 that cannot be dubbed due to copyright restrictions, the partial titles PT1, PT2, PT4 and PT5 can be the obj ect of dubbing as is, so a warning mark MC is displayed to the side of the representative image of the entire title T1 indicating that a an editingprocess of dividing is necessary beforehand.

On the other hand, as an example of the display in step S4, for example, in the case shown in FIG. 4, title T2 cannot become an object of dubbing onto the DVD 202 because the color television standard broadcast format is different, so an addition-prohibited mark MNG indicating that fact is displayed to the side of that representative image.

Also, after the addition-prohibited mark MNG or warning mark MC has been displayed for the title T that is the object of the current judgment, next, it determined whether or not the processing of steps S1 to S6 has been completed for all of the titles T to be dubbed (step S6), and when process is not yet completed (step S6: NO) , the process returns to step S1 in order to execute processing of steps S1 to S6 for the next title T that is to be the object of judgment.

However, in the judgment of step S6 when the processing of steps S1 to S6 has been completed for all of the titles to be dubbed (step S6: YES) , then with the warning marks MC or addition-prohibited marks MNG displayed on the representative images showing each of the titles T as shown in FIG. 4, the user executes the process of adding the titles T to be dubbed to the dubbing list DB depending on that mark (step S7).

Moreover, titles T that are specified to be added are then checked whether or not dubbing is prohibited for the title, that is, the titles are checked whether or not they are titles for which the addition-prohibited mark MNG is not displayed in the representative image (step S8), and when the title T is a title for which the addition-prohibited mark MNG is displayed (step S8: NO), a display or audio message for warning of that is performed using an external display that displays the display shown in FIG. 4, or speaker (step S11), and then the process moves on to step S13, which will be described later.

On the other hand, in the judgment of step S8, when a title specified to be added is not a title T for which the addition-prohibited mark MNG is displayed (step S8: YES), then next it is determined whether or not that title T specified to be added is allowed to be dubbed onto the DVD 202 as recorded on the HD 200, or in other words, in the example shown in FIG. 4, the title T specified to be added is checked whether or not it is only title T3 (step S9).

When the title T can be dubbed as is (only title T3) (step S9: YES) the process moves as is to step S12, which will be described later, however, when the title T specified to be added is a title T that cannot be dubbed as is (title T1 in the example shown in FIG. 4) (step S9: NO), then the editing process necessary for dubbing that title T is performed (in the example shown in FIG. 4, title T1 is divided into partial titles PT1 to PT5, and except for partial title PT3, they are set to be added) (step S10) , and after that editing, the partial titles are added to and registered in the dubbing list (step S12).

It is then determined whether or not the processing of steps S7 to S12 has been completed for all of the titles T to be dubbed (step S13), and when processing has not been completed (step S13: NO) , the process returns to step S7 in order to execute the processing of steps S7 to S12 for the next title T to be added.

On the other hand, in the judgment of step S13, when the processing of steps S7 to S12 has been completed for all of the titles to be dubbed (step S13: YES), the process of generating the dubbing list of this embodiment ends.

As shown at the bottom of FIG. 4, for example, at the stage where processing up to step S13 has been completed, the dubbing list, which contains only the titles T to be added as the object of dubbing onto the DVD 202, is displayed on the external display. Also, at this time, the partial titles PT1, PT2, PT4 and PT5 that make up the title T on the HD 200 are contained in the dubbing list DL together with the corresponding representative images as new dubbing titles LT1 to LT4 that were divided from the original title T1 such that they are independent from each other. Also, the title T3 that was originally separate and capable of being dubbed is contained in the dubbing list DL together with the corresponding representative image as is with the dubbing title LT5.

Next, FIG. 3 will be used to explain the operation of actual editing before dubbing that is based on the dubbing list DL created by processing as shown in FIG. 2.

As shown in FIG. 3, when starting the editing of titles to be dubbed after the process of creating the dubbing list DL shown in FIG. 2 has been completed, f irst, the representative images corresponding to each of the dubbing titles LT are displayed (step S15) , and an attribute mark that indicates the attributes of a dubbing title LT is displayed on the side of that representative image (step S16). When performing an editing process to combine a plurality of dubbing titles LT together in the stage of dubbing onto the DVD 202, this attribute mark is displayed in the representative image in order to distinguish the dubbing title LT for which the editing process is to be performed from other dubbing titles LT, in order that only dubbing titles LT that have the same attributes become the object of the editing process for combining them together on the DVD 202 as described above.

More specifically, in the case shown in FIG. 4, since the dubbing titles LT1 to LT3 (originally, partial titles PT1, PT2 and PT4) have the same standard color broadcast format and same aspect ratio as each other, they become the object of the combination-editing process, and the same attribute mark M1 to indicate that fact is displayed in the representative image of each one; and since dubbing titles LT4 and LT5 (originally, partial title PT5 and title T3) have the same standard color broadcast format and same aspect ratio as each other, they become the object of the combination-editing process, and the same attribute mark M2 (the mark has a different shape so that it can be distinguished from the previous attribute mark M1) to indicate that fact is displayed in the representative image of each one.

After attribute marks for the dubbing titles LT that are the object of the current judgment have been displayed, next it is determined whether or not the processing of steps S15 and S15 has been completed for all of the dubbing titles LT to be dubbed (step S17), and when processing has not been completed (step S17: NO), the process returns to step S15 in order to execute the processing of steps S15 and S16 for the next dubbing title LT to be judged.

On the other hand, in the judgment of step S17, when the processing of steps S15 and S16 has been completed for all of the dubbing titles to be dubbed (steps S17: YES), then with the representative images showing each of the dubbing titles LT, including the attribute marks, displayed as shown at the bottom of FIG. 4, the user executes the process of specifying the dubbing titles LT that will become the object of dubbing based on the attribute marks M (step S18).

Also, it is determined whether or not the dubbing titles LT that are specified for dubbing are dubbing titles LT that are capable of becoming the object of the desired combination-editing process, or in other words, whether or not they are just dubbing titles LT for which attribute marks having the same shape are displayed in the representative images (step S19) , and when the titles LT are not just dubbing titles LT having the same attributes (step S19:NO), an external display or speaker is used to perform a warning notification such as a display or audible message for notifying of that fact (step S21) , and the dubbing-list-editing process ends.

However, in the judgment of step S19, when the titles LT are just dubbing titles LT having the same attributes (step S19: YES), the dubbing-list-editing process ends.

Also, after this, actual dubbing is executed at the desired timing from the HD 200 to the DVD 202 for each of the dubbing titles LT registered in the final edited dubbing list.

As was explained above, in the operation of the recorder 100 of this embodiment, before executing the editing process required for dubbing to the DVD 202, the titles T that are the object of the dubbing are judged as to whether or not they are capable of being dubbed to the DVD 202, and notification data indicating the judgment results are output, so based on this notification data, the user is able to determine whether or not dubbing to the DVD 202 is possible before actually executing the editing process.

Also, by determining whether or not dubbing is possible before executing the editingprocess , it is possible to improve the convenience and efficiency of the dubbing process.

Moreover, since a representative image of the titles T on the HD 200, the dubbing list DL, addition-prohibited marks MNG and warning marks MC are output, it is possible to easily know whether or not dubbing is possible at that output destination.

Furthermore, in addition to determining whether or not a title T can be the object of dubbing as it is recorded on the GF 200, a past log is used to determine whether or not dubbing would be possible by executing an editing process, and since the those judgment results are output in two stages, it is possible to determine beforehand whether a title T can become the object of dubbing by a related editing process even though the title T cannot be the object of dubbing as is, and thus it is possible to more efficiently determine whether or not dubbing is possible.

Also, since attribute marks M indicating the attributes of each dubbing title LT that is the object of dubbing is included after the editing process, it is possible from the attribute data to visually identify whether data can be processed or not.

Moreover, for dubbing titles LT having a plurality of attributes, dubbing titles LT having the same attributes are indicated using an attribute mark M, so it is possible to easily check which dubbing titles have the same attributes.

Furthermore, since attribute marks M are displayed for each dubbing title LT that indicate only the dubbing titles LT that can be dubbed based on the judgment of whether or not dubbing is possible, it is possible to check at a glance which dubbing titles LT can be dubbed.

In the embodiment described above, the standard color broadcast format of moving images contained in a title T, the aspect ratio of the moving images, and copying restrictions according to copyright law were used as judgment criteria for the judgment in step S3 shown in FIG. 2, however, in addition to these, for example, the following cases could also be used as judgment criteria: the case in which based on the amount of data of the title to be dubbed, it is not possible to maintain enough empty space on the dubbing destination to record the title; the case in which dubbing itself is prohibited when copying of the entire title T is restricted; the case in which dubbing itself is prohibited when the moving images on the HD 200 are edited in frame units; the case in which dubbing itself is prohibited when the contents of the management data for a title T on the HD 200 in title units is not allowed on the DVD 202; the case in which there is a warning about performing dubbing (warning that editing by division is assumed) when there are moving images contained in one title T on the HD 200 having different resolution; the case in which there is a warning about performing dubbing (warning that editing by division is assumed for each audio format) when there is audio for the moving images contained in one title T on the HD 200 having different audio format; or the case in which there is a warning about performing dubbing (warning that editing by division is assumed for each language) when there is audio using a plurality of kinds of languages contained in the moving images of one title T on the HD 200.

Also, for the judgment criteria of the judgment of step S19 shown in FIG. 3, in addition to the criteria described above, for example, the following cases could also be used as judgment criteria: the case in which there is a warning about performing editing (warning that editing by division is assumed) when there are moving images contained in one dubbing title LT having different resolution; or the case in which there is a warning about performing editing (warning that editing by division is assumed for each audio format) when there is audio for the moving images in one dubbing title LT having different audio format.

By using these various judgment criteria and executing the dubbing-programming process of this embodiment, it is possible to more accurately determine whether performing dubbing is possible according to the recording format of the DVD 202.

Furthermore, in the embodiment described above, the case of using a HD 200 and DVD 202 as the recording media for dubbing was explained, however, beside this, the invention could also be applied to the case of performing dubbing using a pair of DVD or pair of HD, or the invention could also be applied to the case of executing dubbing from a DVD to a HD.

Also, in the embodiment described above, the case of applying the invention to dubbing between different media, that is, recording titles T that were reproduced from a HD 200 onto a DVD 202 again, was explained, however, besides this, it is also possible to apply the invention to recording titles again on the same HD or on the same DVD. In this case, when there are copyright restrictions such as 'copying prohibited' or 'single copy only' for a title on the HD, notification, such as a 'prohibited' display (in the case of 'copying prohibited') is displayed when trying to dub the title on the same HD.

Furthermore, the programs corresponding to the flowcharts shown in FIG. 2 and FIG. 3 are stored on a data-recording medium such as a flexible disc, or the programs could be obtained over a network such as the Internet, and by using a general-purpose microcomputer to read and execute these programs, it is possible to use that general-purpose microcomputer as the system-control unit 166 of this embodiment.

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. An editing apparatus (100) which edits the processes of at least a reproduction/recording process that re-records information that is reproduced from a recording medium to that recording medium itself, or a reproduction/recording process that re-records said reproduced information to other recording medium, **characterized in that** the editing apparatus comprises:
a judgment device (160) which determines whether or not it is possible to execute said reproduction/recording process based on the recorded state of said information that is approved for at least said recording medium or said other recording medium before executing an editing process of said processes; and
an output device (140) which outputs notification information to the outside in order to notify of said judgment results before execution of said editing process.

2. The editing apparatus (100) according to claim 1, wherein
said output device (140) outputs as said notification information:
original-information-Identification information which identifies said information that is recorded on said recording medium before execution of said reproduction/recording process;
object-information- Identification information for identifying said information that is the object of one of said reproduction/recording processes; and
prohibition-information- Identification information that, indicates said information that is prohibited based on the judgment information from said judgment means from becoming the object of one of said reproduction/recording processes.

3. The editing apparatus (100) according to claim 1, wherein
said judgment device (160) further determines whether or not unprocessible information can become the object of one of said reproduction/recording processes by performing a editing process which is predetermined in said unprocessible information, when it was determined that said information that is recorded on said recording medium is unprocessible information that cannot become the object of one of said reproduction/recording processes in its recorded state as recorded on said recording medium; and
said output device (140) outputs as said notification information for said unprocessible information that can become the object of one of said reproduction/recording processes by performing said editing process:
original-information- Identification information which identifies said unprocessible information that is recorded on said recording medium before execution of said reproduction/recording process; and
object-information- Identification information which identifies the contents of said unprocessible information that becomes the object of one of said reproduction/recording processes after said editing process.

4. The editing apparatus (100) according to claim 3, wherein
said object-information-Identification information comprises attribute information that shows the attributes of said unprocessible information that becomes the object of one of said reproduction/recording processes after said editing process.

5. The editing apparatus (100) according to claim 4, wherein
said object-information- Identification information uses the same said attribute information to show said unprocessible information having the same attributes in a plurality of said unprocessible information.

6. The editing apparatus (100) according to claim 1, wherein
said output device outputs as said notification information:
original-information- Identification information which identifies said information that is recorded on said recording medium before execution of said reproduction/recording process; and
object-information- Identification information that is object-information- Identification information which identifies said information that is the object of one of said reproduction/recording processes, and shows only said information that is determined, based on the judgment information of said judgment device, to be capable of being the object of one of said reproduction/recording processes.

7. The editing apparatus (100) according to any one of the claims 1 to 6, wherein
said judgment device (160) determines whether or not one of said reproduction/recording processes can be executed based on at least:
the type of color-television standard broadcast format for the approved information that is recorded on at least said recording medium or said other recording medium;
the number of times copying is allowed for said information on said recording medium before execution of said reproduction/recording process;
the editing units for said information on said recording medium before execution of said reproduction/recording process;
the contents of management information for managing said information and that correspond to said information on said recording medium before execution of said reproduction/recording process;
the aspect ratio of image information approved for recording on at least said recording medium or said other recording medium;
the resolution of image information approved for recording on at least said recording medium or said other recording medium;
the encoding method of audio information approved for recording on at least said recording medium or said other recording medium;
the recording capacity of the area on at least said recording medium or said other recording medium for which recording of said information is possible; or
the language numbers of audio information approved for recording on at least said recording medium or said other recording medium.

8. The editing apparatus (100) according to any one of the claims 1 to 7 further comprises:
a reproduction device (201,203) which reproduces specified said information from said recording medium based on the contents of said output notification information;
a information-editing device (166) which performs said editing process that corresponds to specified contents on said specified information based on the contents of said notification information; and
a recording device (201,203) which records at least said reproduced information or information for which said editing process was performed on at least said recording medium or said other medium based on the contents of said output notification information.

9. An editing method of editing the contents of at least a reproduction/recording process that re-records information that is reproduced from a recording medium to that recording medium itself, or a reproduction/recording process that re-records said reproduced information to other recording medium, **characterized in that** the editing method comprises:
a judgment process of determining whether or not it is possible to execute said reproduction/recording process based on the recorded state of said information that is approved for at least said recording medium or said other recording medium before executing an editing process of said contents; and
an output process of outputting notification information to the outside in order to notify of said judgment results before execution of said editing process.

10. An information recording medium in which an editing program is recorded in a readable way by a computer included in an editing apparatus, **characterized in that** the information recording medium comprises the editing program causing the computer to function as:
a judgment device which determines whether or not it is possible to execute said reproduction/recording process based on the recorded state of said information that is approved for at least said recording medium or said other recording medium before executing an editing process of said contents; and
an output device which outputs notification information to the outside in order to notify of said judgment results before execution of said editing process.
